(19) Europäisches Patentamt
European Patent Office
Office européen des brevets

(11) Veröffentlichungsnummer : **0 018 948**
**B1**

(12) # EUROPÄISCHE PATENTSCHRIFT

(45) Veröffentlichungstag der Patentschrift : **13.07.83**

(51) Int. Cl.$^3$ : **C 07 C101/22**, C 08 G 59/52, C 07 C 99/00

(21) Anmeldenummer : **80810145.5**

(22) Anmeldetag : **01.05.80**

(54) **N-substituierte Asparaginsäurederivate, Verfahren zu ihrer Herstellung, ihre Verwendung und mit ihrer Hilfe hergestellte Epoxidharze.**

(30) Priorität : **08.05.79 CH 4305/79**

(43) Veröffentlichungstag der Anmeldung : **12.11.80 Patentblatt 80/23**

(45) Bekanntmachung des Hinweises auf die Patenterteilung : **13.07.83 Patentblatt 83/28**

(84) Benannte Vertragsstaaten : **CH DE FR GB IT LI NL**

(56) Entgegenhaltungen :
**DE A 2 152 237**
**DE C 848 045**
**GB A 1 449 528**
**US A 2 200 220**
**US A 2 761 874**

**ARCHIV DER PHARMAZIE, Band 308, Nr. 7, 1975 K.-C. LIU et al. « Synthese N-substituierter DL-Asparaginsäure-beta-methylester als potentielle Hypocholesterinämika » Seiten 564 bis 571**

(73) Patentinhaber : **CIBA-GEIGY AG**
**Patentabteilung Postfach**
**CH-4002 Basel (CH)**

(72) Erfinder : **Lohse, Friedrich, Prof. Dr.**
**Buchenstrasse 23**
**CH-4104 Oberwil (CH)**
Erfinder : **Stockinger, Friedrich**
**Stutzrain 4**
**CH-4434 Hölstein (CH)**
Erfinder : **Eldin, Sameer H., Dr.**
**Am Stausee 27/18**
**CH-4127 Birsfelden (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

# N-substituierte Asparaginsäurederivate, Verfahren zu ihrer Herstellung, ihre Verwendung und mit ihrer Hilfe hergestellte Epoxidharze

Gegenstand der vorliegenden Erfindung sind N-substituierte Asparaginsäuremonoester, Verfahren zu ihrer Herstellung und die Verwendung der neuen N-substituierten Asparaginsäuremonoester als Härtungsmittel für Epoxidharze, insbesondere zur Herstellung von B-Stufenharze.

Härtbare Epoxidharzmischungen, worin das Epoxidharz und das Härtungsmittel in äquivalenten Mengen vorliegen, sind bei Raumtemperatur meistens nicht lagerstabil, da die Vernetzung der Epoxidharze langsam fortschreitet. Um die Haltbarkeit von härtbaren Epoxidharzmischungen zu erhöhen, ist man dazu übergegangen, sowohl das Epoxidharz als auch das Härtungsmittel zu modifizieren, indem man das Epoxidharz oder das Härtungsmittel mit entsprechenden Reaktionskomponenten nach dem sogenannten « Advancement-Verfahren » vorverlängert oder, indem man das Epoxidharz mit dem Härtungsmittel vorreagieren lässt, wobei noch härtbare und schmelzbare Epoxidharze erhalten werden. Liegen bei der Vorreaktion das Epoxidharz und das Härtungsmittel in äquivalenten Mengen vor, so erhält man die sogenannten B-Stufenharze, die ohne weitere Zugabe von Härtungsmitteln und allein durch Erhitzen in den vollständig vernetzten Zustand (C-Stufe) überführt werden können.

Aus der DE-AS 1 061 067 ist es bereits bekannt, dass man durch Vorreaktion von Epoxidharzen mit einem 4,4'-Diaminodiarylalkan Produkte mit einer Lagerfähigkeit erhält, wobei diese Produkte als Pressmassen, d. h. unter Anwendung von Hitze und Druck, sehr gut verarbeitbar sind. Aus der DE-AS lässt sich aber nicht entehmen, wie die Lagerstabilität dieser Pressmassen gemessen wurde. Die vorliegenden Vergleichsversuche zeigen nun, dass die Reaktivität eines aus Bisphenol A-diglycidyläther und 4,4'-Diaminodiphenylmethan hergestellten B-Stufenharzes während der Lagerung bei Raumtemperatur innerhalb weniger Tage schnell abnimmt, sodass solche B-Stufenharze nach dieser Lagerzeit für andere Anwendungen, wie Sinterpulverbeschichtungen oder als Giessharze, nicht mehr geeignet sind.

Ferner werden in der DE-AS 2 152 237 als Härtungsmittel für Epoxidharze und zur Herstellung von B-Stufenharzen Polyaddukte aus α, β-ungesättigten Carbonylverbindungen, wie z. B. Acrylsäure oder Acrylsäureester, mit verzweigten aliphatischen oder cycloaliphatischen Diaminen offenbart, wobei unter Reaktion der Carboxyl- bzw. Estergruppen mit den Aminogruppen des Diamins Polyamide erhalten werden. Dagegen weisen die erfindungsgemässen Verbindungen keine Amidstrukturen auf.

Es wurde nun gefunden, dass man durch Umsetzung von Maleinsäuremonoestern mit bestimmten Diaminen N-substituierte Asparaginsäuremonoester erhält, die wertvolle Härtungsmittel für Epoxidharze darstellen und sich mit Epoxidharzen zu B-Stufenharzen mit hervorragenden Lagerstabilitäten verarbeiten lassen.

Gegenstand der vorliegenden Erfindung sind somit neue N-substituierte Asparaginsäuremonoester der Formel I

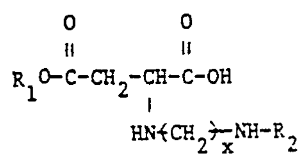

worin $R_1$ ein gegebenenfalls Aethersauerstoffatome enthaltendes Alkyl mit 1 bis 12 C-Atomen, Cyclohexyl, Phenyl, Tolyl oder Benzyl und $R_2$ ein Alkyl mit 3 oder 4 C-Atomen, Cyclohexyl, Phenyl, Tolyl oder Methoxyphenyl bedeuten und x für die Zahl 2 oder 3 steht.

Vorzugsweise bedeuten in der Formel I $R_1$ ein Alkyl mit 1 bis 6 C-Atomen oder Cyclohexyl, $R_2$ ein tert-Butyl oder Cyclohexyl und x die Zahl 3.

Als Alkyl kann $R_1$ beispielsweise die folgende Bedeutung haben :

$CH_3(CH_2)_y$ y = 0 bis 11, 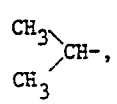 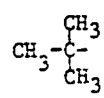 ,

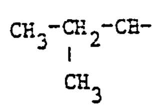 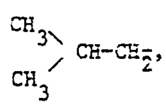 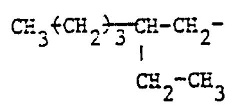

und

$CH_3-CH_2(O-CH_2-CH_2)_z$ z = 1 bis 3.

Als geeignete Alkyle für $R_2$ seien beispielsweise genannt : Isopropyl, sek.-Butyl und tert.-Butyl.

Die Asparaginsäurederivate der Formel I können gemäss den in « Journal of Organic Chemistry », Band 24 (1959), Seite 1096-98, und in « Canadian Journal of Chemistry », Band 40 (1962), Seite 163-5,

beschriebenen Verfahren hergestellt werden, indem man an 1 Mol eines Maleinsäuremonoesters der Formel II

$$R_1O-\overset{\overset{O}{\|}}{C}-CH{=}CH-\overset{\overset{O}{\|}}{C}-OH \qquad (II)$$

worin $R_1$ die gleiche Bedeutung wie in Formel I hat, 1 Mol eines Amins der Formel III

$$H_2N—(CH_2)_x—NH—R_2 \qquad (III)$$

worin $R_2$ und x die gleiche Bedeutung wie in Formel I haben, in Gegenwart eines tertiären Amins anlagert.

Vorzugsweise geht man bei der Herstellung der erfindungsgemässen Verbindung der Formel I von Maleinsäuremonoestern der Formel II aus, worin $R_1$ ein Alkyl mit 1 bis 6 C-Atomen oder Cyclohexyl bedeutet, und setzt diese mit den Aminen der Formel III, worin $R_2$ vorzugsweise ein tertiäres Butyl oder Cyclohexyl bedeutet und x für 3 steht, in Gegenwart von Triäthylamin oder Pyridin, insbesondere Triäthylamin, um. Die Maleinsäuremonoester der Formel II sind bekannt (s. z. B. « Canadian Journal of Chemistry, Band 40 (1962), Seite 163-5). Desgleichen stellen die Amine der Formel III bekannte Verbindungen dar.

Wie eingangs erwähnt, stellen die erfindungsgemässen Asparaginsäurederivate wertvolle Härtungsmittel für Epoxidharze dar und eignen sich insbesondere zur Herstellung von lagerstabilen B-Stufenharzen, die bei Raumtemperatur praktisch unbeschränkt haltbar sind und keine wesentliche Aenderung hinsichtlich ihrer Reaktivität erfahren.

Die B-Stufenharze können hergestellt werden, indem man die Epoxidharze in äquivalenten Mengen mit den erfindungsgemässen Asparaginsäurederivaten (1 Epoxidäquivalent auf 1 Aminwasserstoffäquivalent) mischt und dann zusammenschmilzt, bis die Mischung homogen und die beim Zusammenschmelzen auftretende exotherme Reaktion abgeklungen ist. Anschliessend wird das Reaktionsgemisch auf Raumtemperatur abgekühlt und gegebenenfalls gemahlen. Nach wochenlanger Lagerung bei Raumtemperatur können die B-Stufenharze durch Erhitzen nochmals in den flüssigen Zustand werden und gegebenenfalls unter Verformung anschliessend vollständig ausgehärtet (vernetzt) werden.

Zur Herstellung der B-Stufenharze eignen sich im Prinzip alle bekannten Typen von Epoxidharzen. Als solche seien beispielsweise genannt : Vor allem kommen Epoxidverbindungen mit durchschnittlich mehr als einer an ein Heteroatom (z. B. Schwefel, vorzugsweise Sauerstoff oder Stickstoff) gebundenen Glycidylgruppe, β-Methylglycidylgruppe oder 2,3-Epoxycyclopentylgruppe in Frage, wie insbesondere Bis-(2,3-epoxycyclopentyl)-äther ; Di- bzw. Polyglycidyläther von mehrwertigen aliphatischen Alkoholen, wie 1,4-Butandiol, oder Polyalkylenglykolen, wie Polypropylenglykole ; Di- oder Polyglycidyläther von cycloaliphatischen Polyolen, wie 2,2-Bis-(4-hydroxycyclohexyl)-propan ; Di- bzw. Polyglycidyläther von mehrwertigen Phenolen, wie Resorcin, Bis-(p-hydroxyphenyl)-methan, 2,2-Bis(p-hydroxyphenyl)-propan (Diomethan), 2,2-Bis-(4′-hydroxy-3′,5′-dibromphenyl)-propan, 1,1,2,2-Tetrakis-(p-hydroxylphenyl)-äthan, oder von unter sauren Bedingungen erhaltenen Kondensationsprodukten von Phenolen mit Formaldehyd, wie Phenol-Novolake und Kresol-Novolake ; Di- bzw. Poly-(β-methylglycidyl)-äther der oben angeführten mehrwertigen Alkohole oder mehrwertigen Phenole ; Polyglycidylester von mehrwertigen Carbonsäuren, wie Phthalsäure, Terephthalsäure, $\Delta^4$-Tetrahydrophthalsäure und Hexahydrophthalsäure ; N-Glycidylderivate von Aminen, Amiden und heterocyclischen Stickstoffbasen, wie N,N-Diglycidylanilin, N,N-Diglycidyltoluidin, N,N,N′,N′-Tetraglycidyl-bis(p-aminophenyl)-methan ; Triglycidylisocyanurat ; N,N′-Diglycidyläthylenharnstoff ; N,N′-Diglycidyl-5,5-dimethylhydantoin, N,N′-Diglycidyl-5-isopropylhydantoin ; N,N′-Diglycidyl-5,5-dimethyl-6-isopropyl-5,6-dihydrouracil.

Geeignete Epoxidverbindungen sind ferner alicyclische Diepoxide, wie Vinylcyclohexendioxyd, Limonendioxyd, Dicyclopentadiendioxyd, Aethylenglykol-bis-(3,4-epoxytetrahydrocyclopentadien-8-yl)-glycidyläther, sowie Verbindungen mit zwei Epoxycyclohexylresten, wie Diäthylenglykol-bi-(3,4-epoxycyclohexancarboxylat), Bis-3,4-(epoxycyclohexylmethyl)-succinat, 3′,4′-Epoxy-6′-methyl-cyclohexylmethyl-3,4-epoxy-6-methyl-cyclohexancarboxylat und 3′,4′-Epoxyhexahydrobenzal-3,4-epoxycyclohexan-1,1-dimethanol.

Beispiel 1

N-(3′-Cyclohexylaminopropyl)-asparaginsäure-4-methylester

In einem mit Rührer, Thermometer, Kühler und Tropftrichter versehenen Glaskolben werden 356 g (3,4 Mol + 14 % Ueberschuss) Maleinsäure-monomethylester vorgelegt und unter intensivem Rühren und Eiswasserkühlung 480 ml Triäthylamin innerhalb von 2 Stunden bei 5-8 °C Innentemperatur zugetropft. Anschliessend trägt man rasch 372,6 g (2,4 Mol) 3-Cyclohexylaminopropylamin ein, lässt die exotherme Reaktion abklingen und erwärmt das Reaktionsgemisch innerhalb von 30 Minuten bis auf 85 °C, wobei

das Reaktionsprodukt auskristallisiert. Nach beendeter Reaktion kühlt man auf Raumtemperatur ab, vermischt das Produkt mit 1 100 ml Aceton, filtriert ab, vermischt den Filterrückstand erneut mit 900 ml Aceton, filtriert die Suspension, wäscht den Filterrückstand mit Aceton und trocknet das Produkt bei 60 °C und 53,2 mbar. Es werden 555,4 g (87,2 % der Theorie) eines weissen, kristallinen Asparaginsäurederivates erhalten, das sich bei 163 °C zersetzt.

Elementaranalyse :

| berechnet : | gefunden : |
|---|---|
| 58,72 % C | 58,84 % C |
| 9,15 % H | 9,27 % H |
| 9,78 % N | 9,83 % N |

Das 100 MHz-$^{1}$H-NMR-Spektrum deckt sich mit folgender Struktur :

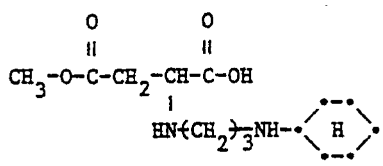

Beispiel 2

N-(3'-Cyclohexylaminopropyl)-asparaginsäure-4-äthylester

Analog Beispiel 1 werden 394,3 g (2,4 Mol + 14 % Ueberschuss) Maleinsäure-monoäthylester vorgelegt und unter Kühlung 480 ml Triäthylamin zugetropft. Anschliessend werden 372,6 g (2,4 Mol) 3-Cyclohexylaminopropylamin zugegeben und das Reaktionsgemisch 25 Minuten lang bei 84°-86 °C umgesetzt. Man arbeitet gemäss Beispiel 1 auf und erhält 546,8 g (75,7 % der Theorie) eines weissen, kristallinen Asparaginsäurederivates, das sich bei 152 °C zersetzt.

Elementaranalyse :

| berechnet : | gefunden : |
|---|---|
| 59,88 % C | 60,22 % C |
| 9,38 % H | 9,43 % H |
| 9,31 % N | 9,44 % N |

Die 100 MHz-$^{1}$H-NMR- und Massenspektren stimmen mit folgender Struktur überein :

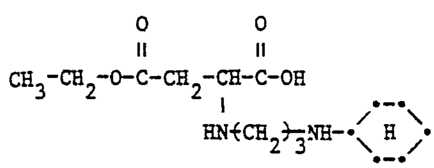

Beispiel 3

N-(3'-Cyclohexylaminopropyl)-asparaginsäure-4-isopropylester

Gemäss Beispiel 1 werden 350,2 g (2,0 Mol + 10 % Ueberschuss) Maleinsäure-monoisopropylester mit 400 ml Triäthylamin versetzt und anschliessend mit 311,3 g (2,0 Mol) 3-Cyclohexylamino-1-propylamin 35 Minuten lang bei 59°-85 °C zur Reaktion gebracht. Nach der Aufarbeitung, analog Beispiel 1, werden 515 g (82,2 % der Theorie) des gewünschten Asparaginsäurederivates erhalten, das sich bei 151-152 °C zersetzt.

Elementaranalyse :

| berechnet : | gefunden : |
|---|---|
| 61,32 % C | 61,25 % C |
| 9,33 % H | 9,56 % H |
| 8,94 % N | 8,98 % N |

Das 100 MHz-¹H-NMR-Spektrum steht im Einklang mit folgender Struktur :

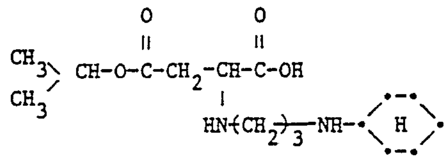

Beispiel 4

N-(3'-Cyclohexylaminopropyl)-asparaginsäure-4-cyclohexylester

Zu einer Lösung aus 433,8 g (2 Mol + 10 % Ueberschuss) Maleinsäuremonocyclohexylester und 200 ml Dioxan werden, analog Beispiel 1, 400 ml Triäthylamin zugetropft und dann mit 310,5 g (2,0 Mol) 3-Cyclohexylamino-1-propylamin 40 Minuten lang bei 70°-90 °C umgesetzt. Gemäss Beispiel 1 wird aufgearbeitet und man erhält 604 g (85,2 % der Theorie) eines weissen, kristallinen Asparaginsäurederivates, das sich bei 172-172 °C zersetzt.

Elementaranalyse :

| berechnet : | gefunden : |
|---|---|
| 64,38 % C | 64,57 % C |
| 9,67 % H | 9,66 % H |
| 7,90 % N | 8,01 % N |

Das 100 MHz-¹H-NMR-Spektrum deckt sich mit folgender Struktur :

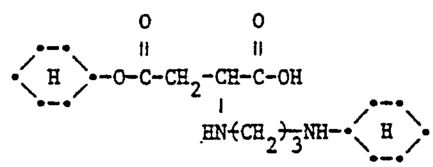

Beispiel 5

N-(3'-tert.-Butylaminopropyl)-asparaginsäure-4-äthylester

Analog Beispiel 1 werden 317 g (2,2 Mol) Maleinsäure-monoäthylester mit 400 ml Triäthylamin versetzt und anschliessend mit 260 g (2,0 Mol) 3-tert.-Butylaminopropylamin zur Reaktion gebracht. Gemäss Beispiel 1 wird aufgearbeitet und man erhält 423,4 g (77,2 % der Theorie) eines weissen, kristallinen Asparaginsäurederivates, das nach dem Umkristallisieren in einem Gemisch von Aethanol/Aceton (1 : 3) bei 174°-175 °C schmilzt.

Elementaranalyse :

| berechnet : | gefunden : |
|---|---|
| 55,59 % C | 55,53 % C |
| 9,33 % H | 9,13 % H |
| 9,97 % N | 10,05 % N |
| 2,38 % $H_2O$ | 2,38 % $H_2O$ |

Das 100 MHz-¹H-NMR-Spektrum stimmt mit folgender Struktur überein :

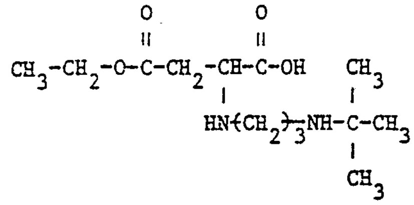

Beispiel 6

N-(2'-Phenylaminoäthyl)-asparaginsäure-4-benzylester

Gemäss Beispiel 1 wird ein Gemisch aus 41,2 g (0,20 Mol) Maleinsäure-monobenzylester und 15 ml Dioxan mit 40 ml Triäthylamin versetzt und anschliessend mit 27,2 g (0,20 Mol) N-Phenyl-1,2-diaminoäthan 20 Minuten lang bei 85° umgesetzt. Man arbeitet das Reaktionsprodukt analog Beispiel 1 auf und erhält 53,0 g (77,4 % der Theorie) des erwarteten Asparaginsäurederivates.

Die in Dimethylformamid umkristallisierte Verbindung schmilzt bei 194 °C.

Elementaranalyse :

| berechnet : | gefunden : |
|---|---|
| 66,65 % C | 66,32 % C |
| 6,48 % H | 6,48 % H |
| 8,18 % N | 8,48 % N |

Das 100 MHz-$^1$H-NMR-Spektrum deckt sich mit folgender Struktur :

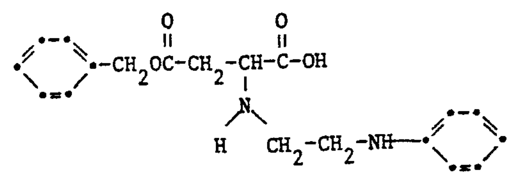

Anwendungsbeispiele

Beispiel I

Herstellung eines B-Stufenharzes aus einem flüssigen Epoxidharz und N-(3′-Cyclohexylaminopropyl)-asparaginsäure-4-cyclohexylester als Härterkomponente

100 g eines flüssigen Epoxidharzes auf Basis von Bisphenol A und Epichlorhydrin mit einem Epoxidgehalt von 5,2 Aequivalenten/kg werden in einer Blechbüchse auf 130 °C erwärmt. 61,3 g N-(3′-Cyclohexylaminopropyl)-asparaginsäure-4-cyclohexylester (hergestellt nach Beispiel 4) werden in fein pulverisierter Form unter das Epoxidharz gemischt (entsprechend einem Verhältnis von 1 Aminwasserstoffäquivalent auf 1 Epoxidäquivalent).

Innerhalb von etwa 12 Minuten steigt die Temperatur langsam auf 150-170 °C, der Asparaginsäureester geht dabei leicht in Lösung. Nach 5-10 Minuten klingt die Reaktion ab und die ziemlich viskose Masse wird auf Aluminiumfolie ausgegossen.

Nach dem Erkalten kann das erhaltene B-Stufenharz leicht pulverisiert werden. Es ist dies das B-Stufenharz A.

Vergleichsbeispiel 1

Herstellung eines B-Stufenharzes aus einem flüssigen Epoxidharz und Diaminodiphenylmethan als Härterkomponente

100 g eines Bisphenol A-diglycidyläthers mit einem Epoxidgehalt von 5,3 Aequivalenten/kg werden in einer Blechbüchse vorgelegt. 26,2 g 4,4′-Diaminophenylmethan (entsprechend 1 Aminwasserstoffäquivalent auf 1 Epoxidäquivalent) werden im Epoxidharz bei 50 °C gelöst und die Mischung anschliessend bei derselben Temperatur während 4 Stunden vorreagiert. Die viskose Masse wird auf Aluminiumfolie ausgegossen und das B-Stufenharz nach 24 Stunden pulverisiert. Es ist dies das B-Stufenharz B.

Vergleichsbeispiel 2

Herstellung eines B-Stufenharzes aus einem flüssigen und einem festen Epoxidharz sowie aus Diaminodiphenylmethan als Härterkomponente

30 g eines Bisphenol A-diglycidyläthers mit einem Epoxidgehalt von 5,3 Aequivalenten/kg und 17,5 g 4,4′-Diaminodiphenylmethan, geschmolzen, werden bei 50 °C während 5 Minuten vermischt. Dazu werden 70 g festes Epoxidharz auf Basis von Bisphenol A und Epichlorhydrin mit einem Epoxidgehalt von 1,94 Aequivalenten/kg, geschmolzen bei 90-100 °C, gegeben.

Das Ganze wird während 2-3 Minuten durchgemischt und die viskose Masse sofort auf Aluminiumfolie ausgegossen.

Nach dem Erkalten wird das B-Stufenharz zerkleinert und pulverisiert. Es ist dies das B-Stufenharz C.

Vergleich der Lagerstabilitäten der B-Stufenharze A, B, C

Je 50 g der B-Stufenharze A, B und C wurden in geschlossenen Fläschchen bei Rautemperatur aufbewahrt und die Reaktivität durch Gerlierzeitmessungen bei erhöhter Temperatur periodisch kontrolliert — dabei zeigte das unter Verwendung des erfindungsgemässen N-(3'-Cyclohexylaminopropyl)-asparaginsäure-4-cyclohexylesters hergestellte B-Stufenharz A eine unvergleichbar bessere Lagerstabilität als die zum Vergleich herangezogenen B-Stufenharze B und C.

| B-Stufenharz | Prozentuale Aenderung der Gelierzeit nach Lagerung bei Raumtemperatur |
|---|---|
| A | 0-3%[1] nach 75 Tagen |
| B | 55%[2] nach 2 Tagen |
| | 76% nach 5 Tagen |
| C | 17-28%[3] nach 7,5 Tagen |
| | 49-61%[3] nach 75 Tagen |

1) Messtemperatur der Gelierzeit bei 160, 180 und 200 °C
2) Messtemperatur der Gelierzeit bei 120 °C
3) Messtemperatur der Gelierzeit bei 100 und 160 °C.

Beispiel II

Herstellung eines lagerstabilen Pulversystems aus einem festen Epoxidharz und N-(3'-Cyclohexylaminopropyl)-asparaginsäure-4-cyclohexylester

100 g eines festen Epoxidharzes auf Basis von Bisphenol-A und Epichlorhydrin mit einem Epoxidgehalt von 1,1 Aequivalenten/kg werden in einer Kugelmühle während 16 Stunden vorgemahlen. 5 g bereits in Form eines Pulvers vorliegenden N-(3'-Cyclohexylaminopropyl)-asparaginsäure-4-cyclohexylesters (entsprechend einem Verhältnis von 1 Aequivalent Aminwasserstoffatom auf 1 Aequivalent Epoxidgruppe) werden dazugegeben und das Ganze wird während 3 Stunden in der Kugelmühle feinst gemahlen und gleichzeitig gründlich durchgemischt. Die Lagerstabilität wurde analog wie beim vorhergehenden Beispiel beschrieben geprüft, wobei diesmal aber die Lagertemperatur 40 °C betrug. Nach 30 Tagen Lagerung bei dieser Temperatur wurde eine Reaktivitätsänderung von $< 1$ % festgestellt, was einer sehr guten Lagerstabilität entspricht. Das neue Pulversystem war überdies am Ende der Lagerperiode rieselfähig.

**Ansprüche**

1. N-substituierte Asparaginsäuremonoester der Formel I

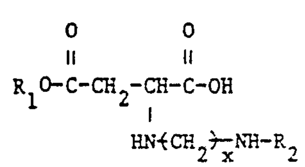

(I)

worin $R_1$ ein gegebenenfalls Aethersauerstoffatome enthaltendes Alkyl mit 1 bis 12 C-Atomen, Cyclohexyl, Phenyl, Tolyl oder Benzyl und $R_2$ ein Alkyl mit 3 oder 4 C-Atomen, Cyclohexyl, Phenyl, Tolyl oder Methoxyphenyl bedeuten und x für die Zahl 2 oder 3 steht.

2. Asparaginsäurederivate gemäss Anspruch 1, worin in der Formel I $R_1$ ein Alkyl mit 1 bis 6 C-Atomen oder Cyclohexyl und $R_2$ ein tert.-Butyl oder Cyclohexyl bedeuten und x für die Zahl 3 steht.

3. N-(3'-Cyclohexylaminopropyl)-asparaginsäure-4-methylester.

4. N-(3'-Cyclohexylaminopropyl)-asparaginsäure-4-äthylester.

5. N-(3'-Cyclohexylaminopropyl)-asparaginsäure-4-isopropylester.

6. N-(3'-Cyclohexylaminopropyl)-asparaginsäure-4-cyclohexylester.

7. N-(3'-tert.-Butylaminopropyl)-asparaginsäure-4-äthylester.

8. Verfahren zur Herstellung von Asparaginsäurederivaten der Formel I gemäss Anspruch 1, dadurch gekennzeichnet, dass man an 1 Mol eines Maleinsäuremonoesters der Formel II

$$R_1O-\overset{\overset{O}{\|}}{C}-CH=CH-\overset{\overset{O}{\|}}{C}-OH \qquad (II)$$

worin $R_1$ die gleiche Bedeutung wie in Formel I hat, 1 Mol eines Amins der Formel III

$$H_2N-(CH_2)_x-NH-R_2 \qquad (III)$$

worin $R_2$ und x die gleiche Bedeutung wie in Formel I haben, in Gegenwart eines tertiären Amins anlagert.

9. Verwendung der Asparaginsäurederivate der Formel I gemäss Anspruch 1 als Härtungsmittel für Epoxidharze.

10. B-Stufenharze aus den Asparaginsäurederivaten der Formel I gemäss Anspruch 1 und Epoxidharzen, die erhalten werden, indem man die Asparaginsäurederivate mit Epoxidharzen, die durchschnittlich mehr als eine Epoxidgruppe pro Molekül aufweisen, in äquivalenten Mengen bei erhöhter Temperatur reagieren lässt und nach Abklingen der dabei auftretenden exothermen Temperatur das erhaltene Reaktionsprodukt auf Raumtemperatur abkühlt und gegebenenfalls zerkleinert.

**Claims**

1. An N-substituted aspartic acid monoester of the formula I

$$R_1O-\overset{\overset{O}{\|}}{C}-CH_2-\underset{\underset{HN\left(CH_2\right)_x NH-R_2}{|}}{CH}-\overset{\overset{O}{\|}}{C}-OH \qquad (I)$$

wherein $R_1$ is an alkyl group which has 1 to 12 C atoms and which optionally contains ether oxygen atoms, or it is a cyclohexyl, phenyl, tolyl or benzyl group, $R_2$ is an alkyl group having 3 or 4 C atoms, or it is a cyclohexyl, phenyl, tolyl or methoxyphenyl group, and x is the number 2 or 3.

2. An aspartic acid derivative according to Claim 1, wherein, in the formula I, $R_1$ is an alkyl group having 1 to 6 C atoms or a cyclohexyl group, $R_2$ is a tert-butyl or cyclohexyl group, and x is the number 3.

3. N-(3'-Cyclohexylaminopropyl)-aspartic acid-4-methyl ester.

4. N-(3'-Cyclohexylaminopropyl)-aspartic acid-4-ethyl ester.

5. N-(3'-Cyclohexylaminopropyl)-aspartic acid-4-isopropyl ester.

6. N-(3'-Cyclohexylaminopropyl)-aspartic acid-4-cyclohexyl ester.

7. N-(3'-tert-Butylaminopropyl)-aspartic acid-4-ethyl ester.

8. A process for producing an aspartic acid derivative of the formula I according to Claim 1, which process comprises adding, by means of an addition reaction, to 1 mol of a maleic acid monoester of the formula II

$$R_1O-\overset{\overset{O}{\|}}{C}-CH=CH-\overset{\overset{O}{\|}}{C}-OH \qquad (II)$$

wherein $R_1$ has the same meaning as in the formula I, 1 mol of an amine of the formula III

$$H_2N-(CH_2)_x-NH-R_2 \qquad (III)$$

wherein $R_2$ and x have the same meanings as in the formula I, in the presence of a tertiary amine.

9. Use of an aspartic acid derivative of the formula I according to Claim 1 as a curing agent for epoxide resins.

10. B-Stage resins formed from the aspartic acid derivatives of the formula I according to Claim 1 and epoxide resins, which B-stage resins are obtained by reacting, in equivalent amounts at elevated temperature, the aspartic acid derivatives with epoxide resins containing on average more than one epoxide group per molecular, and, after the exothermic reaction occurring has subsided, cooling the resulting reaction product to room temperature, and optionally pulverising it.

**Revendications**

1. Monoesters d'acides aspartiques substitués à l'azote qui répondent à la formule I

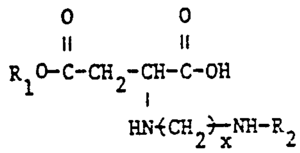

(I)

dans laquelle $R_1$ représente un radical alkyle contenant de 1 à 12 atomes de carbone et renfermant éventuellement des atomes d'oxygène de fonction éther, ou représente un radical cyclohexyle, phényle, tolyle ou benzyle, $R_2$ représente un radical alkyle à 3 ou 4 atomes de carbone ou un radical cyclohexyle, phényle, tolyle ou méthoxyphényle, et x représente le nombre 2 ou le nombre 3.

2. Dérivés de l'acide aspartique selon la revendication 1 dans la formule I desquels $R_1$ représente un radical alkyle contenant de 1 à 6 atomes de carbone ou un radical cyclohexyle, $R_2$ représente un radical tert-butyle ou cyclohexyle et x représente le nombre 3.

3. N-(Cyclohexylamino-3 propyl)-aspartate-4 de méthyle.

4. N-(Cyclohexylamino-3 propyl)-aspartate-4 d'éthyle.

5. N-(Cyclohexylamino-3 propyl)-aspartate-4 d'isopropyle.

6. N-(Cyclohexylamino-3 propyl)-aspartate-4 de cyclohexyle.

7. N-(tert-Butylamino-3 propyl)-aspartate-4 d'éthyle.

8. Procédé de préparation de dérivés de l'acide aspartique de formule I selon la revendication 1, procédé caractérisé en ce qu'on fixe, sur 1 mole d'un monoester maléique répondant à la formule II

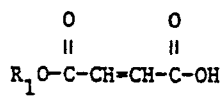

(II)

dans laquelle $R_1$ a la même signification que dans la formule I, 1 mole d'une amine répondant à la formule III

$$H_2N—(CH_2)_x—NH—R_2 \qquad \text{(III)}$$

dans laquelle $R_2$ et x ont les mêmes significations que dans la formule I, en présence d'une amine tertiaire.

9. Application des dérivés de l'acide aspartique de formule I selon la revendication 1 comme durcisseurs pour des résines époxydiques.

10. Résines du stade B constituées de dérivés de l'acide aspartique de formule I selon la revendication 1 et de résines époxydiques, que l'on a obtenues en faisant réagir à température élevée, en des quantités équivalentes, les dérivés de l'acide aspartique avec des résines époxydiques contenant en moyenne plus d'un radical époxy par molécule, et en refroidissant, après cessation de la réaction exothermique qui s'est alors déclenchée, le produit réactionnel obtenu jusqu'à la température ambiante, puis en le broyant éventuellement.